# EUROPEAN PATENT APPLICATION

(11) **EP 2 777 846 A1**
(43) Date of publication of application: **17.09.2014**
(21) Application number: 12848684.2
(22) Date of filing: 29.10.2012
(51) Int. Cl.: B22F 7/08, E02F 9/28, A01B 15/06

(54) **PLOUGH SHARE TIP, PROCESS AND SAND MOULD FOR THE PRODUCTION THEREOF**

(30) Priority: 11.11.2011 ES 201131817 P
(71) Applicant: Bellota Agrisolutions, S.L., 20230 Legazpia (Guipúzcoa) (ES); Casa Maristas Azterlan, 48200 Durango (Vizcaya) (ES)
(72) Inventor: ARRATIBEL AGUIRRE, Juan Carlos, E-20230 Legazpia (Guipúzcoa) (ES); FERNÁNDEZ CALVO, Ana Isabel, E-48200 Durango (Vizcaya) (ES)
(74) Representative: Ungria López, Javier
(86) International application number: PCT/ES2012/070757
(87) International publication number: WO 2013/068620

(57) **Abstract**

The tip has at least one leading edge and is secured to the forwardmost part of a plough share. Starting from this premise the tip comprises a base part (1) made from moulded steel material in combination with at least one insert made from widia material embedded in at least one end zone of the base part (1), said end zone corresponding to the respective leading edge of the tip. The widia-material inserts are initially positioned in specific zones in the mould cavity in order for said cavity then to be filled with poured steel material, in which said widia material will become embedded, such that, upon solidification of the assembly, the tip of the invention will be formed.

## Description

### Object of the invention

The present invention, as outlined in the contents of this descriptive specification, refers to a plough-share tip and a process and mould for the production thereof.

The service life of the tip in question is greater than usual, thanks to its new structure and to the production process.

Furthermore, it must be noted that the production process is simple, which results in a significant cost reduction, in terms of both economic costs and in terms of saving production time.

The object of the present invention is therefore a plough-share tip with built in long lasting elements which are very wear resistant., in such a way that when the plough-share, along with the tip, penetrates the land in order to break it, cultivate it and/or plough it, the tip, object of the invention being worn substantially less than conventional tips, owing precisely to the new structure of said tip and also owing to the production process used.

Evidently, the tip is always fitted in the forwardmost end zone of the plough-share, in such a way that the hardest area of the tip is concentrated in at least one leading edge of said plough-share.

The tip usually comprises two leading edges located in end stretches of the tip, namely the reversible tip, in such a way that when a leading edge is worn down, the position of the tip changes to make the most of the other leading edge of said tip.

### Background of the invention

Currently, in agricultural labour, among other specific tools, so called tips and plough-shares are employed.

These tips are elements which are coupled to the plough-shares in the forwardmost zone of the same and are charged with working the land in order to break it up, cultivate it and/or plough it.

Given that these tips come into direct contact with the land, the abrasion and therefore wear that the same undergo is very high.

With a view as to increase the service life of these tips, the same are usually made in a reversible way, i.e. they have two working ends, in such a way that when one of the working ends has worn down, the tip is dismounted from the plough-share, then being coupled once again by the other end.

These tips are produced, mostly, using warm forged steel.

Although producing the tip in a reversible way increases the service life of the same, said increase is not sufficient, a high number of tips being worn out and therefore a significant cost being generated for farmers and users of these tips.

Likewise, when changing the tip, a long period of time is required to do so, which in turn leads to having to stop the machine and by proxy, also the cost that this implies.

With a view as to increasing the service life of the tips, the Spanish Invention Patent published under number ES 2327481 mentions a production process for tools which undergo abrasion, in which these tools are coated with an anti-abrasion material in order to increase their service life.

The problem with the solution proposed in said Patent is the cost for producing the tools using this process, as well as the long period of time needed to prepare the moulds and for the coatings on the same to settle.

### Description of the Invention

With the aim of fulfilling the objectives and avoiding the limitations set out in the above sections, the invention proposes a plough-share tip and a process and sand mould for the production thereof.

In theory, the tip will have at least one leading edge, which in turn, will be fixed to the forwardmost part of the plough-share.

It is characterised in that it comprises a base part made of moulded steel material in combination with at least one widia-material insert embedded in at least one end zone of the base part, this end zone corresponding to the respective leading edge of the tip.

The steel material of the tip comprises the following composition expressed in terms of percentage by wright, relative to the total of the alloy of said steel:
- Carbon (C): 0.25% - 0.45%
- Magnesium (Mn): 1.40%-1.60%
- Phosphorous (P): < 0.035%
- Aluminium (Al): 0.025% - 0.050%
- Silica (Si): 0.40%-0.60%
- Chrome (Cr): 0.25%-0.65%
- Sulphur (S): <0.035%
- Titanium (Ti): 0.010%-0.020%

The widia-material insert formed by tungsten carbide powder linked by cobalt comprises the following composition:
- Cobalt, between 3.5 and 30%
- Chemical composition of the tungsten carbide: W₃c to W₆C.

The size of the tungsten carbide particles is delimited between 0.6 and 6 microns.

The tungsten carbide powder that forms part of the widia-material composition is compressed and heated under a pressure of between 10,000 and 20,000 bars until it reaches a temperature of up to approximately 1,600°C, in such a way that the mass is compacted by means of sinterization, the cobalt acting as a linking element between the tungsten carbide particles.

The hardness of the widia-material inserts is delimited between 650 and 2,060 HV30, whilst the density of these widia-material inserts is delimited between 6 and 15.5 g/cm³.

Furthermore, it must also be pointed out that the amount of widia material is delimited between 0.1 and 5% of the total weight of the tip.

In contrast, the amount by weight of the widia material in the end zones of the tip is delimited between 20 and 70%.

The widia material comprises a multitude of particles, which are distributed uniformly inside a first surrounding metal grille, in such a way that in this case, the size of these widia particles is delimited between 1 and 10 mm and they are separated from each other by between 0 and 10 mm.

In another embodiment, the widia material comprises at least one widia plate housed within a second surrounding metal grille.

The widia-material inserts are located in approximately perpendicular areas, which are adjacent to the inclined surfaces that delimit the leading edges of the tip, object of the invention.

It is also worth highlighting that the widia-material inserts are arranged in such a way that they are separated by at least 3 mm from any point of the tip's perimeter contours, both the first and second surrounding grilles having built in end fastening extensions.

The sand mould for producing the plough-share tip has a built in internal cavity according to the geometry of the tip in combination with storage areas where the end fastening extensions of the grilles, both first and second, are located and these storage areas communicating with the mould's internal cavity.

The production process for producing the plough-share tip is characterised in that it comprises the following stages:
- Placing the widia-material inserts into the internal cavity of the sand mould.
- Pouring the steel alloy into the mould, filling its internal cavity and therefore mixing it with the widia-material inserts.
- Solidification of the steel alloy that forms the tip, surrounding the widia particles in the steel material, without causing these particles to be displaced during the pouring stage and during the subsequent solidification thereof, the surrounding grille which will be built into the steel material being melted in this stage.
- Extracting the tip from said sand mould once it has solidified and cooled down to a temperature of less than 500°c.
- Treating the surface of the tip by means of shot-blasting.
- Applying a hardening and subsequent tempering thermal treatment to the tip obtained, with the aim of providing the steel base with suitable properties to present a good hardness-tenacity relationship.

The surface treatment of the tip by means of shot-blasting may be completed by means of either a mechanical or grinding operation.

As it is poured, the steel material alloy reaches a temperature delimited between 1,500°C and 1,675°C, the time it remains within the mould being at least 1 hour.

The time taken to fill the sand mould is delimited between 2 and 30 seconds.

Tempering the tip consists of introducing the same into a thermal treatment oven and heating it to a temperature of between 750 and 850°C for between 25 and 35 minutes, in order to subsequently cool it very quickly by introducing it into a fluid, selected from water, water with polymers and oil.

After the cooling stage described above, the tempering treatment is carried out, which entails heating the tip to between 200 and 400°C for between 1.5 and 2.5 hours, followed by cooling it in the air until it reaches room temperature.

During this thermal hardening and tempering treatment, a hardness of between 45 and 55 HRC is achieved, giving the tip a high level of resistance against wear.

Below, in order to facilitate better understanding of this descriptive specification, as an integral part thereof, is a set of figures which provide a non-limiting illustration of the object of the invention.

### Brief description of the drawings

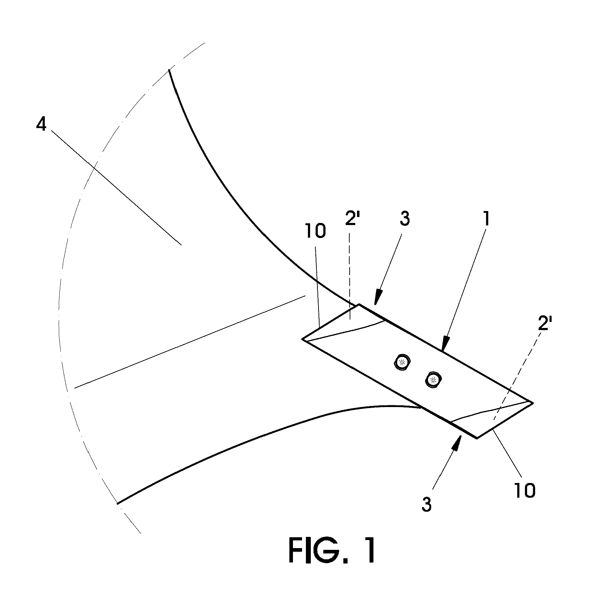

**Figure 1****.** Is a perspective view of a plough-share wherein the plough-share tip, object of the invention, has been included, with a small one-piece plate made of widia inside the same. A further object of the present invention is the process and sand mould for the production of the tip.

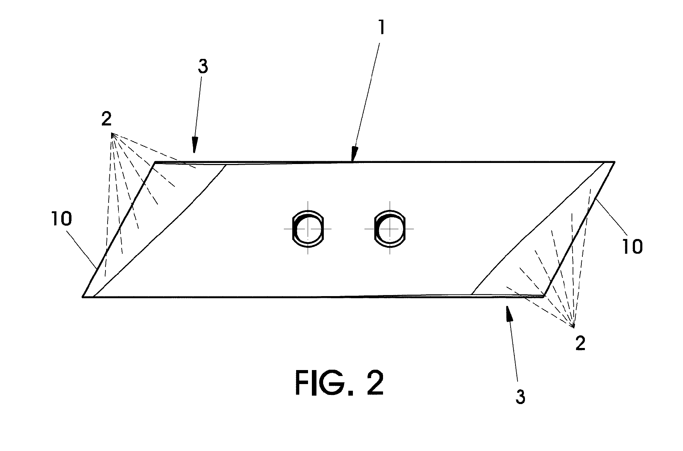

**Figure 2****.** Is a plan view of the plough-share tip with widia particles inside.

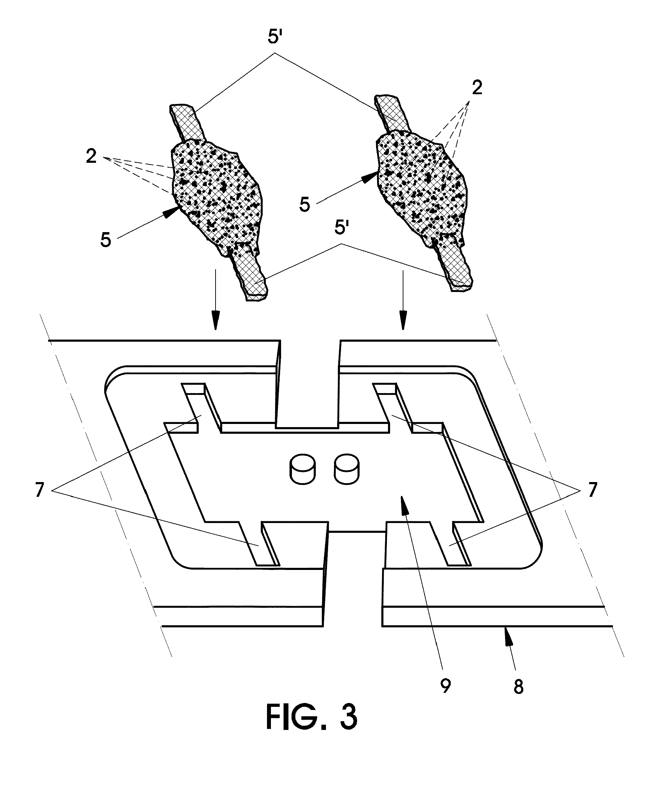

**Figure 3****.** Is an exploded view of a cavity of the mould and a grille by way of surrounding mesh with widia particles, this grille being prepared for insertion inside the mould cavity, with said widia particles.

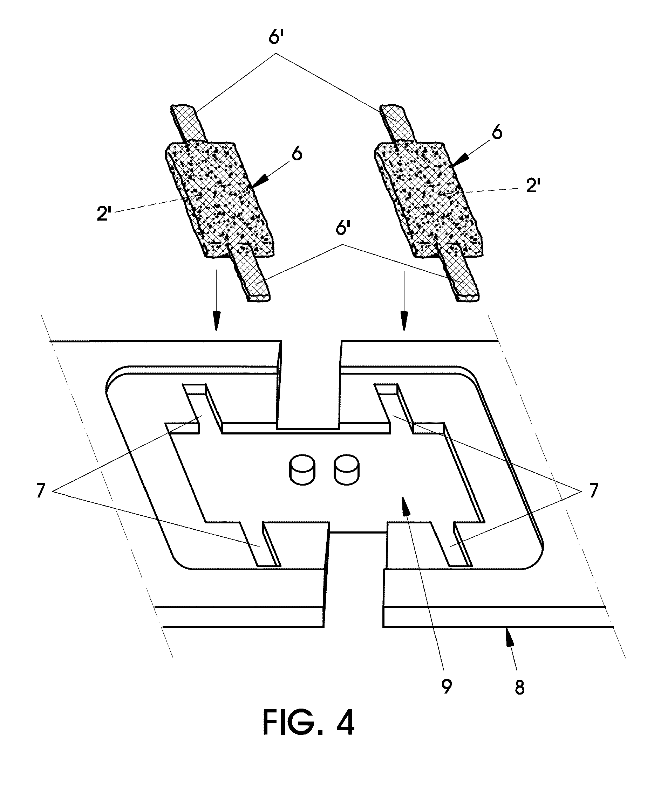

**Figure 4****.** Is an exploded view of that represented in the previous figure, according to a second embodiment, wherein the widia material stored within a second grille comprises a one-piece widia plate.

### Description of one example embodiment of the invention

Considering the numbering adopted in the figures, the plough-share tip is denoted by the following nomenclature in the description:
1. Base part
2. Widia inserts (in particle form)
2'. Widia inserts (one-piece plate)
3. End zones
4. Plough-share
5. First surrounding metal grille
5'. End extensions of the surrounding grille.
6. Second surrounding metal grille.
6'. End extensions of the surrounding grille.
7. Storage areas.
8. Sand mould.
9. Internal cavity of the mould
10.Inclined lateral surfaces

The tip, object of the invention, comprises a base part 1 formed by a steel alloy moulded with a composition like that described in the description section of the invention, this base part 1 in turn having a number of built in widia inserts 2-2', which have previously been introduced in the steel material during the moulding process, these widia inserts 2-2' being located in end zones 3 of the steel part 1, these end zones 3 constituting the leading edges during the breaking up, cultivation and/or ploughing of the land. The widia inserts 2-2' are the elements charged with increasing the service life of the tip.

The widia material is a hard metal which provides the necessary hardness to tackle wear which the tip might be submitted to.

As can be seen, the tip is fixed in the forwardmost part of a plough-share 4 in a conventional manner, in such a way that when the leading edge of the active tip is worn down, the tip changes position in order to locate the other similar leading edge on the forwardmost end of the plough-share.

The tip is produced with the steel material and the widia material, in such a way that both the composition of the materials and the variables of the production method form the fundamental aspects in view of obtaining a perfect join between these materials.

The join between both materials is the key to increasing the service life of the tip, given that this join must be resistant enough to mean that the widia inserts, in particle form 2 and as the only one-piece body in the form of a plate 2', do not detach from the steel material as the tip is in operation and sufficiently robust to increase shock resistance.

The widia material is an element formed by tungsten carbide, linked together by means of using cobalt, in such a way that in the present case, the percentage of cobalt varies between 3.5 to 30%, emphasising that tungsten carbides have a chemical composition from W₃C to W₆C, the size of the tungsten carbide particles being between 0.6 and 6 microns.

The tungsten carbide powder is compressed and heated under a pressure of 10,000 to 20,000 bars, up to approximately 1,600°C. In these conditions, the mass is compacted by means of sinterization, the cobalt acting as a linking agent for the carbide particles. The hardness of the widia obtained as such is between 650 and 2,060 HV30 and the density between 6 and 15.5 g/cm³.

The penetration method for controlling the "HV" hardness (method for measuring the DIN 50133 hardness) is known and described below. A diamond in the form of a pyramid is compressed in a test with a defined force. The hardness is calculated by the pressure diagonal, measured upon ending the test. Depending on the test force, the small load range and micro-hardness is determined. In metals, micro-hardness is independent of the testing force. The Vickers method (HV) is used with very hard materials; for small tests, hard and thin and for warm surfaces. After the "HV" the force test is shortened, as is the incidence time should it differ from the usual time.

The amount of widia material introduced into the tip varies between 0.1 and 5 % of the total weight of said tip. The widia will be distributed inside the tip, in the wear area of the same, in such a way that the percentage of widia in comparison to that of steel in said zone is up to 70% by weight.

In order to introduce the widia material inside the tip, the widia inserts 2-2' will be made, which may be of two kinds.

The first kind constitutes a first surrounding metal grille 5 by way of mesh with reduced thickness, inside which widia particles 2 are introduced, distributed uniformly inside said first surrounding metal grille 5. These particles are between 1 and 10 mm in size and are separated from one another by between 0 and 10 mm. The particle size and the amount of separation between the same must be such that it provides correct wetting on the part of the molten steel as it is cast and solidified and furthermore, such that good properties in terms of standing up to wear are obtained.

The second widia insert is a one-piece plate, which is located within a second surrounding metal grille 6 with reduced thickness, into which said widia plate 2' is introduced, the dimensions of which depend on the size of the tip. In this insert, the volume of the widia plate 2' will be completely embedded in the steel material.

Any of these inserts 2-2' will be located inside the tip, in such a way that they will be oriented approximately perpendicular to the operational zone of the tip or in other words, to the inclined surfaces 10 corresponding to the end zones 3 of the tip, object of the invention.

The surrounding metal grids 5-6 of the inserts 2-2' have the function of supporting the widia during the casting process and ensure that the same is not displaced from its correct position. Likewise, since it is reduced in thickness and owing to the high temperature at which the molten steel enters inside the sand mould 8, said surrounding metal grille 5-6 is melted until it disappears, the solid join between the steel and the widia material remaining in this zone.

The surrounding metal grilles 5-6 of the first and second embodiment described have a number of end fastening extensions 5'-6', located in such a way that they correspond with storage areas 7 inside the sand mould 8, to thus ensure correct positioning of the widia material, these storage areas 7 being in communication with an internal cavity 9 of said sand mould 8.

The widia material, whether in plate 2' form of in the form of a set of particles 2, will have a separation of at least 3 mm relative to the edges of the tip in all of its directions.

The abovementioned storage areas 7 are built into the sand mould 8, thus facilitating quick and easy fitting of the abovementioned inserts, in such a way that in said storage areas, the end extensions 5'-6' of the surrounding metal grilles 5-6 are located.

The production process for obtaining the plough-share tip is not described in this section, since full details are given in the description of the invention section.

## Claims

1. **Plough-share tip** comprising the tip with at least one leading edge, which is in turn fixed to the forwardmost part of the plough-share, **characterised in that** it comprises a base part (1) made of moulded steel material in combination with at least one widia-material insert embedded in at least one end zone of the base part (1), said end zone corresponding to the respective leading edge of the tip.

2. **Plough-share tip** according to claim 1, **characterised in that** the steel material comprises the following composition, expressed in percentages by weight in relation to the total weight of the alloy of the steel:
- Carbon, between 0.25% and 0.45%;
- Magnesium, between 1.40% and 1.60%;
- Phosphorous, < 0.035%;
- Aluminium, between 0.025% and 0.050%;
- Silica, between 0.40% and 0.60%;
- Chrome, between 0.25% and 0.65%;
- Sulphur, < 0.035%;
- Titanium, between 0.010% and 0.020%.

3. **Plough-share tip** according to any of the previous claims, **characterised in that** the widia- material insert formed by tungsten carbide powder linked by cobalt, comprises the following composition:
- Cobalt, between 3.5% and 30%;
- Chemical composition of the tungsten carbide: W₃C to W₆C.

4. **Plough-share tip** according to claim 3, **characterised in that** the size of the tungsten carbide particles is delimited between 0.6 and 6 microns.

5. **Plough-share tip** according to any of the previous claims, **characterised in that**:
- the hardness of the widia-material inserts is delimited between 650 and 2,060 HV30;
- the density of the widia-material inserts is delimited between 5 and 15.5 g/cm³.

6. **Plough-share tip** according to any of the claims 3 or 4, **characterised in that** the amount of widia material is delimited between 0.1 and 5% of the total weight of the tip.

7. **Plough-share tip** according to claim 6, **characterised in that** the amount by weight of the widia material in the end zones of the tip is delimited between 20% and 70%.

8. **Plough-share tip** according to any of the previous claims, **characterised in that** the widia material comprises a multitude of widia particles, distributed uniformly inside a first surrounding metal grille (5) by way of mesh.

9. **Plough-share tip** according to claim 8, **characterised in that** the size of the widia particles (2) is delimited between 1 and 10 mm and the separation between them ranges between 0 and 10 mm.

10. **Plough-share tip** according to any of the claims 1 to 7, **characterised in that** the widia material comprises at least one widia plate (2') placed inside a second surrounding metal grille (6).

11. **Plough-share tip** according to any of the claims 8, 9 or 10, **characterised in that** the widia-material inserts are placed in areas adjacent to a number of inclined surfaces 10 which delimit the leading edges of the tip.

12. **Plough-share tip** according to any of the claims 8 to 11, **characterised in that** the widia-material inserts have a separation of at least 3mm relative to any tip of the outline of the perimeter of the tip.

13. **Plough-share tip** according to claims 8 and 10, **characterised in that** a number of end fastening extensions (5'-6') are built into the first (5) and second (6) surrounding grilles.

14. **Sand mould for manufacturing the plough-share tip** according to claim 13, **characterised in that** it has a built in internal cavity (9) according to the geometry of the tip in combination with storage areas (7), where the end extensions (5'-6') of the first (5) and second (6) surrounding metal grilles are located, these storage areas (7) being in communication with the internal cavity (9) of the sand mould (8).

15. **Production process for the plough-share tip** according to the previous claims, **characterised in that** it comprises the following stages:
- placing the widia-material inserts into the internal cavity of the sand mould;
- placing the steel alloy within the sand mould, filling the internal cavity thereof and mixing it with the widia-material inserts;
- solidifying the steel that forms the tip, surrounding the widia particles in the steel material, without any of these particles being displaced during casting and subsequent solidification thereof, the surrounding grille being melted in this stage and then becoming part of the steel material;
- extracting the tip from said sand mould once it has solidified and cooled down to a temperature of less than 500°C;
- treating the surface of the tip by means of shot-blasting;
- applying a thermal tempering and hardening treatment to the tip obtained.

16. **Production process for the plough-share tip** according to claim 15, **characterised in that** applying the surface treatment to the tip by means of shot-blasting is completed by means of either a mechanical or grinding operation.

17. **Production process for the plough-share tip** according to claim 15, **characterised in that** the alloy of the steel material during the casting thereof, reaches a temperature delimited between 1,500°C and 1,675°C.

18. **Production process for the plough-shrae tip** according to claim 17, **characterised in that** the time needed for solidification inside the mould is at least 1 hour.

19. **Production process for the plough-share tip** according to any of the claims 15 or 17, **characterised in that** the time needed to fill the sand mould is delimited between 2 and 30 seconds.

20. **Production process for the plough-share tip** according to any of the claims 15 or 17, **characterised in that**:
- hardening the tip entails introducing the same into a thermal treatment oven and heating it to a temperature of between 750 and 850°C for between 25 and 35 minutes.

21. **Production process for the plough-share tip** according to claim 20, **characterised in that** after the heating process described in the claim above, the tip is cooled very quickly by introducing it into a fluid, which could be water, water with polymers and oil.

22. **Production process for the plough-share tip** according to claim 21, **characterised in that** after the cooling process described in the claim above, the tempering treatment is applied, which entails heating the tip to between 200 and 400 °C for between 1.5 and 2.5 hours, followed by leaving it to cool in the air until it reaches room temperature.

23. **Production process for the plough-share tip** according to claim 15, **characterised in that** the tungsten carbide powder that forms part of the widia material composition is compressed and heated under a pressure of between 10,000 and 20,000 bars until it reaches a temperature of around 1,600°C, in such a way that the mass is compacted by means of sinterization, the cobalt acting as a linking element between the tungsten carbide particles.
